# EUROPEAN PATENT SPECIFICATION

(11) **EP 2 369 214 B1**
(45) Date of publication and mention of the grant of the patent: **04.01.2017**
(21) Application number: 10425058.4
(22) Date of filing: 05.03.2010
(51) Int. Cl.: F16L 37/32, F16L 37/34, F16L 37/22

(54) **Female coupling fitted with a locking system having arcuate sectors**
Mit einem Verschlusssystem mit ringförmigen Sektoren ausgerüstete Innengewindekupplung
Couplage femelle doté d'un système de blocage avec des secteurs toroïdaux

(43) Date of publication of application: 28.09.2011
(73) Proprietor: Faster S.p.A., 26027 Rivolta d'Adda (IT)
(72) Inventor: Rusconi, Paolo, 26027 Rivolta d'Adda (IT)
(74) Representative: Borsano, Corrado

(56) References cited:
- US-A1- 2005 023 826

## Description

The present invention relates to a quick coupling particularly suitable for being used in connecting hydraulic lines in a simple and safe manner, without the need for using specific tools.

It is known that in different applications the ability of connecting and disconnecting tools and equipments to/from the power source in a simple and fast manner may be useful, thus considerably simplifying not only assembly and disassembly of the equipment, but also facilitating maintenance interventions. Therefore, it is known the use of quick couplings whenever and wherever it is necessary to transfer air, water, steam, oil, hydraulic fluids in general, grease or paint from a source to a tool or equipment, whether in industry or agriculture fields.

Of course, the use of quick couplings may be useful even in cases of particularly demanding applications, such as in cases where the hydraulic line is subject to pressure pulses, flow rate peaks, dusty environments and so on. In particular, these working conditions are typical in the most common applications in the fields of earth-moving, construction and demolition.

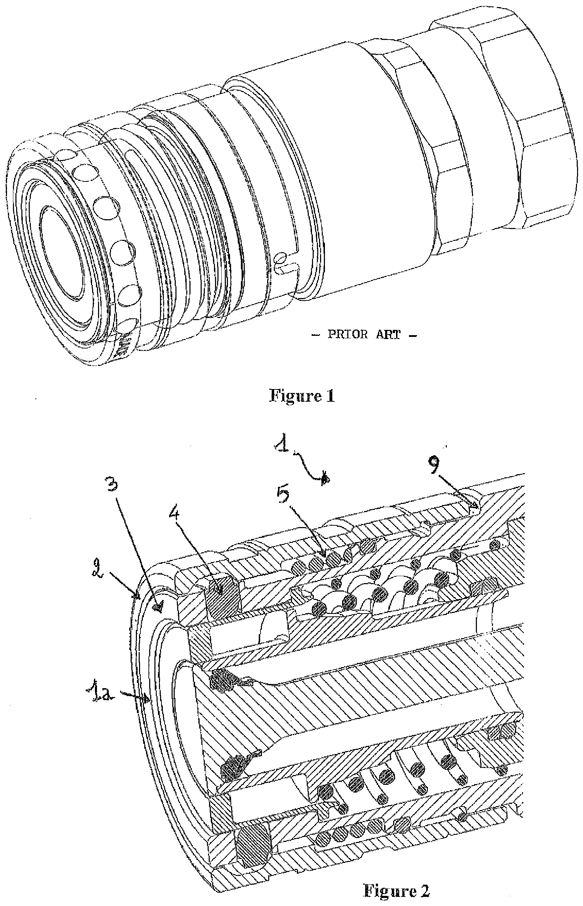

These working conditions undermine the flat-face, quick couplings known from the state of the art, which are designed according to the standard set by the existing international legislation (in particular according to ISO 16028), and on the flat-face, female coupling they have a crown of shaped holes where as many spheres are housed, which are suitable for being inserted into a corresponding groove specifically provided on the male part of the coupling when the parts are engaged. The presence of the locking sphere crown serves the function of keeping both male and female parts coupled. An example of a coupling fitted with locking spheres according to the state of the art is shown in Figure 1.

However, the known solutions have several functional limits and malfunctions, especially when these couplings are used under difficult conditions of flow rate peaks or pressure pulses (even repeated) which are typical in applications in the fields of earth-moving, construction, demolition and the like as mentioned above.

A first drawback affecting the couplings of the known type is related to the very strong forces transmitted by the locking sphere crown between the female body component and the male pin component of the coupling. The transmitted forces which are often pulsing, as mentioned, result in the onset of brinelling problems, i.e. a damage to the contact surface of the locking spheres on the groove obtained on the male component and in which said spheres are inserted. In fact, due to their shape and due to the hardness of the material of which they are made, the spheres tend to engrave the groove surface obtained on the male coupling, mainly because the contact between every sphere and the groove surface is substantially accurate, thus giving rise to a concentration of the transmitted forces.

A damage to the groove surface of the male coupling, which in the long run undermines the strength of the coupling itself, is caused both by the intensity of the exchanged forces and by the fact that, being pulsing, said forces expose the contacting items to the mechanical fatigue phenomenon. Therefore, in the case of demanding applications, the traditional couplings fitted with a locking sphere crown are poorly reliable as they are subject to wear of the contact surfaces of the spheres due both to the concentration of static forces transmitted by the spheres and the pulsatility of said forces which result in the onset of mechanical fatigue phenomena. After some operating cycles, the wear of the groove surface housing the spheres affects the operation of the coupling itself.

An example of such type of coupling is disclosed by US 2005/00238263 which discloses a couplin with arcuate second which act as coupling means between the man and femals couplings.

Therefore, it is the main task of the present invention to suppress or reduce the above-mentioned drawbacks.

In this task, it is thus the object of the present invention to provide a flat-face, female quick coupling suitable for being used even in particularly demanding applications such as those occurring in the fields of earth-moving machines, construction and demolition and in similar fields, being interchangeable with the existing sphere couplings and in accordance with ISO 16028 standard.

It is a further object of the present invention to provide a flat-face, quick coupling offering a high level of strength and reliability, even in the presence of pulsating forces transmitted between male coupling and female coupling, e.g. as it is the case of pressure pulses or flow rate peaks of the fluid passing through the coupling.

Moreover, it is not the least object of the present invention to provide a quick coupling which may suppress or in any case significantly reduce wear phenomena of the contact surfaces, particularly by suppressing the phenomena of brinelling and wear by fatigue, thus ensuring optimum functionality and reliability even after many operating cycles in particularly demanding applications.

This task and these and other objects, which will be clearer below, are achieved by a flat-face, female coupling for especially connecting hydraulic lines and the like, according to claim 1.

Further features and advantages of the present invention will become clearer from the following detailed description, given as an example and not for limitation, and illustrated in the accompanying drawings, in which:
figure 1 shows a diagrammatic perspective view of a flat-face coupling of the type known from the state of the art;
figure 2 shows an axial-section, perspective view of a detail of the quick coupling according to the present invention;
figure 3 shows a partially axial-section, side view of the quick coupling according to the present invention in a first step of the coupling engaging cycle;
figure 4 shows a partially axial-section, side view of the quick coupling according to the present invention in an intermediate step of the coupling engaging cycle;
figure 5 shows a partially axial-section, side view of the quick coupling according to the present invention in the final step of a successful engaging;
figures 6A and 6B show a first embodiment of the arcuate sectors for locking the coupling according to the present invention;
figures 7A and 7B show a second embodiment of the arcuate sectors for locking the coupling according to the present invention;
figure 8 shows an enlarged detail of the groove in which the arcuate sectors according to the present invention are inserted.

With reference to figure 1, showing a flat-face, female coupling of a type known from the state of the art, these couplings generally have a substantially cylindrical body to which several elements are associated, being also hollow, cylindrical and coaxially assembled to one another and defining the internal passage for the fluid as well as striker surfaces for the coupling with the male part. As mentioned, flat-face couplings of the elements described heretofore are common to the known couplings, whereby they will not be further described in detail.

According to a preferred embodiment of the present invention illustrated in the aforementioned figures by way of non-limiting example, with particular reference to figure **2**, the flat-face quick coupling according to the present invention comprises a female part generally indicated by reference number **1**, in turn comprising a main body **1a** of a substantially cylindrical, hollow shape which is coaxially and internally provided with an additional element **3**, or external slider, also being of a substantially cylindrical, hollow shape. A further substantially cylindrical, hollow element (or ring nut) designated by reference number **2** in the accompanying figures, is also coaxially and externally provided with respect to main body **1a**.

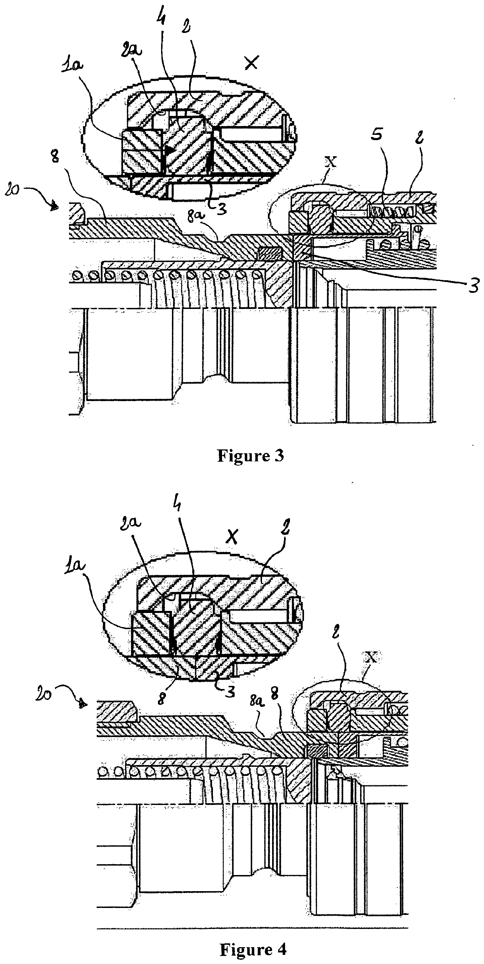

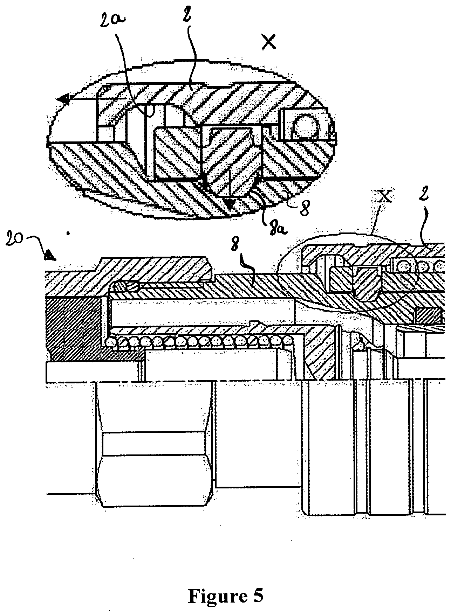

Again with reference to the accompanying figures, ring nut **2** is axially movable with respect to main body **1a**, and a returning spring **5** of the ring nut is positioned between a striker appropriately provided on the internal surface of said ring nut **2** and a similar striker provided on the external surface of said main body **1a**. The front part of the female coupling **1** being designated as the flat part in which the male part (indicated by reference number **20** and visible in the subsequent figures 3, 4 and 5) is inserted, spring **5** acts between said two elements **2** and **1a** and tends to axially bias the ring nut **2** towards the front part of the female coupling **1**. The travel of the ring nut **2** is limited by the presence of a travel locking ring **9** positioned between said ring nut **2** and a striker provided on the external surface of the main body **1a** facing towards said ring nut.

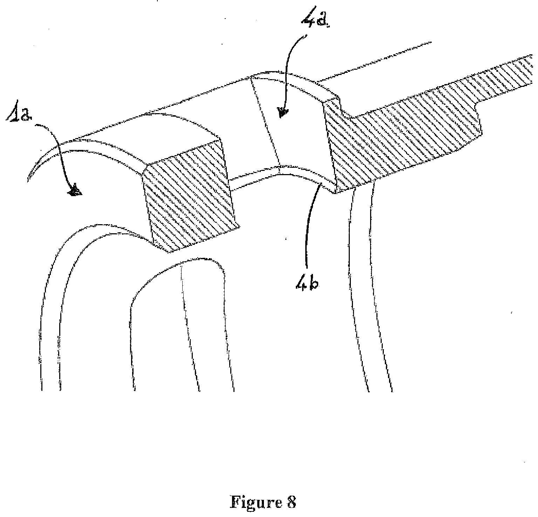

With particular reference to figures 2 and 8, the coupling according to the present invention includes the provision of an annular groove **4a** suitable for receiving a plurality of arcuate sectors **4** on the external surface of said main body **1a**. Said arcuate sectors **4** are preferably 4 or 6 in number depending on the size of the coupling.

The operation of the coupling according to the present invention will now be described with particular reference to figures from 3 to 5.

Figure 3 shows male part **20** and female part **1** of the coupling according to the present invention, being positioned facing each other and ready to be engaged. The X magnification shows a detail of figure 3, in which it is. noted that sectors **4** are held in their position within the groove **4a** as they strike against the external surface of external slider **3** at the bottom, while the tops of the sectors are held in position by the presence of the ring nut **2**.

The operation of the coupling according to the present invention is as follows.

When the male coupling **20** is inserted into the female coupling **1** as shown in figure 4, the male coupling pin **8** axially translates as pushed by the user, and in turn frontally pushes the external slider **3** of the female coupling **1**. Figure 4 shows this intermediate step of engaging the two elements. Arcuate sectors **4** are held in their original position, contained in groove **4a** and their tops are housed in the annular recess **2a** provided at the internal surface of ring nut **2**, from the external surface of the male coupling pin **8** forming a continuous surface with the external surface of the external slider **3** of the female coupling **1**.

By proceeding with the action of inserting male **20** into female **1**, the male coupling pin **8** penetrates the female coupling, thus forcing slider **3** to move back until the toroidal sectors **4** are at an annular groove **8a** appropriately provided on the external surface of said male coupling pin **8** and suitable for housing said arcuate sectors **4**. The annular groove **8a** is provided at an appropriate distance along the axial direction from the flat face of the male coupling pin **8**.

When pin **8** is fully inserted into the female coupling **1**, the annular groove **8a** is at said arcuate sectors **4**, which are firmly held in their axial position by the walls of groove **4a**; however, as the sectors are radially movable and driven by the profile of groove **2a**, they are free to fall within groove **8a** thus stably inserting therein. In fact, the ring nut **2** is biased by the return spring **5** against the arcuate sectors **4**, as shown by the detail in figure 3, for example.

When sectors **4** are free to fall into groove **8a**, the biasing action of spring **5** combined with the appropriately shaped, internal profile of groove **2a** provided on the internal surface of the ring nut **2**, biases sectors **4** radially towards the coupling axis, thus causing the inclusion thereof into groove **8a**. The fall of sectors **4** within groove **8a** allows the external ring nut **2** to be axially fed under the biasing action of coil spring **5**. Feeding the ring nut **2** in the axial direction towards the male part allows to firmly hold the sectors within groove **8a**, as said sectors **4** strike at the top against the internal surface of said ring nut **2** and are therefore forced at the top by ring nut **2** and laterally by groove **4a** to remain within the annular groove **8a**. This coupling configuration ensures that when the male coupling is properly inserted into the female coupling, the tripping of ring nut **2** caused by the arcuate sectors falling into the annular groove **8a** acts as a signal that the connection has been correctly established, and the ring nut itself further constraining the sectors to be in their locking position within groove **8a**, thus preventing the coupling from accidentally disconnecting.

Manually moving the ring nut **2** back, until groove **2a** is at sectors **4**, is thus required to separate the couplings. Thereby, the sectors may move again in the radial direction, this time in the direction away from the coupling axis, the disengagement of sectors **4** from groove **8a** being obtained due to the rounded profile of the sectors themselves.

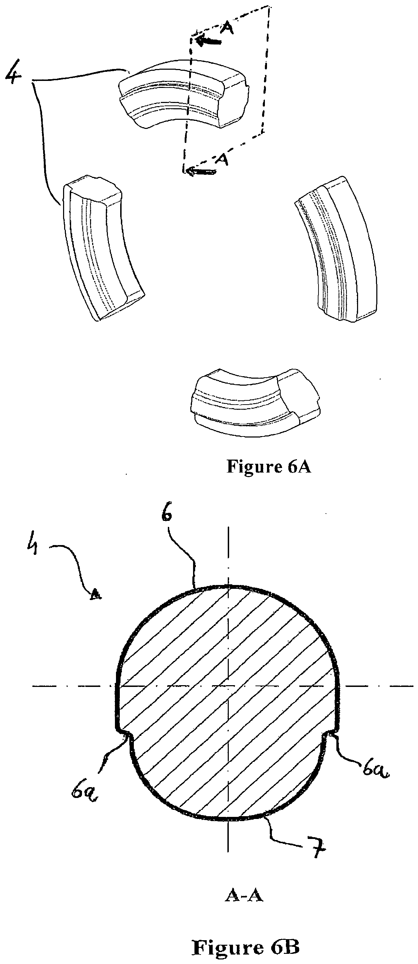

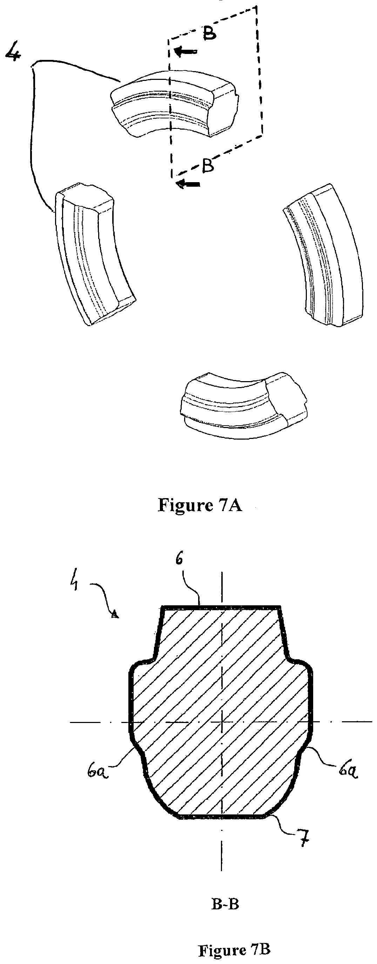

Figures 6A, 6B and 7A, 7B depict two exemplary embodiments of arcuate sectors **4** according to the present invention. The two variants differ in different profile of the cross-section, the two profiles being two possible examples which however share several elements. Figure 6A shows a first embodiment in which the ring has a section A-A, best seen in figure 6B, substantially egg-shaped and discontinuous. Defining the upper and lower space references with reference to the section in figure 6 where the lower portion is the most proximate to the coupling axis, when the elements are assembled, on a transversal plane A-A the section of sectors **4** has a first lower portion **7** suitable for being inserted into said groove **8a**, having smaller width or transversal size, which is joined at a width variation 6a with a second portion **6** of larger width or transversal size, so that first portion **7** may be inserted Into said groove **8a** while the joining zone **6a** strikes against a section reduction **4b**, provided in the lower part of groove **4a**.

Figure 7A shows a second embodiment in which ring **4** has no longer an egg-shaped section on a transversal plane B-B, best seen in figure 7B, but it still has a lower length **7** of smaller width or lateral size which is joined to a larger width length by means of a width variation **6a**. As seen in figure **7**, the larger width length may be then conveniently joined to an upper portion of smaller width by means of a new section variation needed for obtaining the cooperation between the sector and the groove **2a** existing on the ring nut **2**.

With both of these profiles, or any profile having the same section variations, in case of malfunctions of one or more components or in case of incorrect insertion of the male coupling into the female coupling, the sectors are prevented from escaping from their correct positioning within the groove **4a**, since the section reduction **4b** provided at the lower part of groove **4a** strikes against the section variation **6a** provided in a substantially intermediate zone of the transversal profile of the arcuate sectors **4**.

Moreover, from a technological standpoint, the substantially rounded profile shown in figures 6A, 6B may be obtained by means of machine tools, preferably from a steel ring which is turned, then barreled and finally heat treated.

In contrast, the sector with the profile in figure 7A, 7B has been optimized in order to use a moulding manufacturing process. This technological process provides starting from a sintered, heat treated material so as to minimize the material waste resulting from processing with machine tools, and it is therefore more cost-effective when large required quantities of final product justify the implementation of a special mould.

Using arcuate sectors allows to transmit forces across an extended contact surface, thus resulting in less stress on the internal surface of groove **8a** of the male which is therefore less subject to wear, even to fatigue, and free from brinelling phenomena.

Thereby, the coupling according to the present invention is particularly suitable for being used under demanding conditions, e.g. where conditions of flow rate peaks or pressure pulses in the fluid passing through the coupling.

Therefore, we have shown how the coupling according to the present invention achieves the intended object and aims.

In particular, we have shown how the flat-face, female coupling according to the present invention is suitable for being used, even in particularly demanding applications such as for example those found in the fields of earth-moving machines, construction and demolition and in similar fields.

It is a further object achieved by the coupling according to the present invention to provide a high level of operation and reliability even in the presence of pulsating forces transmitted between the male coupling and the female coupling, e.g. as it happens in the case of pressure pulses or flow rate peaks of the fluid passing through the coupling.

Therefore, we have shown how the suggested coupling allows to significantly reduce (if not completely suppress) the phenomena of damage and wear of the coupling locking means, thus increasing reliability and durability of the device over time.

## Claims

1. A flat-face, female coupling (1) of the type comprising a plurality of substantially cylindrical coaxial bodies and comprising locking means (4, 4a, 2, 2a) suitable for preventing the female coupling from accidentally disconnecting from a male coupling (20) and further comprising a central body (1 a) of a hollow cylindrical shape, on the external surface of which an annular groove (4a) is provided, within which said locking means (4) are inserted, said locking means comprising a plurality of arcuate sectors (4), **characterized in that** said sectors (4) have a cross-section having a first lower portion (7) of smaller width or transversal size that is joined at a stepped width variation (6a) provided in a substantially intermediate zone of the transversal profile of said arcuate sectors (4), with a second portion (6) of larger width or transverse size, and **in that** said lower part of said groove (4a) is provided with a section reduction (4b) which the stepped width variation (6a) of the sectors (4) strikes against upon coupling the male and female couplings (20, 1).

2. A female coupling according to claim 1, **characterized in that** said arcuate sectors (4) are four or six in number depending on the coupling size.

3. A female coupling according to one or more of the preceding claims, **characterized in that**, coaxially and internally with respect to said main body (1 a) of a substantially cylindrical, hollow shape, it comprises an external slider (3) also of a substantially cylindrical, hollow shape.

4. A female coupling according to one or more of the preceding claims, **characterized in that**, coaxially and externally with respect to said main body (1 a), it comprises a hollow, cylindrical ring nut element (2).

5. A female coupling according to any one of the preceding claims, **characterized in that** said sectors (4) are held in their position within the groove (4a) as they strike against the external surface of the external slider (3) at the bottom and are held in position at the top by the presence of the ring nut (2).

6. A female coupling according to any one of the claims from 1 to 5, **characterized in that** said sectors (4) have a cross-section having a lower length (7) of smaller width or transverse size which is joined by means of a width variation (6a) to a larger width length, said larger width length being then re-joined to an upper portion having a smaller width by means of a new section variation.

7. A female coupling according to the preceding claim, **characterized in that** said sectors (4) are made by moulding from sintered material.

## Patentansprüche

1. Kupplungsmuffe (1) mit glattem Flansch der Bauart, die eine Vielzahl von im Wesentlichen zylindrischen, koaxiale Körper und Mittel zum Verriegeln (4, 4a, 2, 2a) aufweist, die geeignet sind, eine unbeabsichtigte Trennung der Kupplungsmuffe vom Stecker (20) zu verhindern, und zudem aufweisend einen Hauptkörper (1 a), der von hohler, zylindrischer Form ist, an dessen Außenseite eine kreisförmige Nut (4a) vorgesehen ist, in der die Mittel zum Verriegeln (4) eingesetzt sind, wobei die Mittel zum Verriegeln eine Vielzahl von Bogenstücken (4) aufweisen, die **dadurch gekennzeichnet sind, dass** die Bogenstücke (4) einen Querschnitt mit einem ersten unteren Teil (7) aufweisen, der eine geringere Breite oder Querschnittsgröße aufweist, welcher an einer gestuften Breitenänderung (6a), die im Wesentlichen in einer Zwischenzone des Querschnitts der Bogenstücke (4) liegt, mit einem zweiten Teil (6) größerer Breite oder Querschnittsgröße verbunden ist, und die **dadurch gekennzeichnet sind, dass** der untere Teil der Nut (4a) eine Querschnittsreduzierung (4b) aufweist, die die gestufte Breitenänderung (6a) der Bogenstücke (4) beim Zusammenkuppeln von Stecker und Kupplungsmuffe (20, 1) anschlagen lässt.

2. Kupplungsmuffe gemäß Anspruch 1, **dadurch gekennzeichnet, dass** die Anzahl der Bogenstücke (4) je nach Größe der Kupplung vier oder sechs beträgt.

3. Kupplungsmuffe gemäß einem oder mehreren der vorigen Ansprüche, **dadurch gekennzeichnet, dass** sie koaxial und innenliegend bezüglich des Hauptkörpers (1a), der im Wesentlichen von zylindrischer, hohler Form ist, ein außenliegendes Gleitstück (3) aufweist, das ebenfalls von im Wesentlichen zylindrischer, hohler Form ist.

4. Kupplungsmuffe gemäß einem oder mehreren der vorigen Ansprüche, **dadurch gekennzeichnet, dass** sie koaxial und außenliegend bezüglich des Hauptkörpers (1a), ein hohles, zylindrisches Ringnutelement (2) aufweist.

5. Kupplungsmuffe gemäß einem der vorigen Ansprüche, **dadurch gekennzeichnet, dass** die Bogenstücke (4) in ihrer Position in der Nut (4a) gehalten werden, indem sie am unteren Ende gegen die äußere Oberfläche des außenliegenden Gleitstücks (3) stoßen und am oberen Ende durch die Ringnut (2) in ihrer Position gehalten werden.

6. Kupplungsmuffe gemäß einem der Ansprüche 1 bis 5, **dadurch gekennzeichnet, dass** die Bogenstücke (4) einen Querschnitt mit einem unteren Abschnitt (7) geringerer Breite oder Querschnittsgröße haben, der mittels einer Breitenänderung (6a) mit einem größeren Breitenabschnitt verbunden ist, wobei dieser größere Breitenabschnitt mittels einer weiteren Querschnittsänderung mit einem oberen Teil mit geringerer Breite verbunden ist.

7. Kupplungsmuffe gemäß dem vorigen Anspruch, **dadurch gekennzeichnet, dass** die Bogenstücke (4) durch Gießen von gesintertem Material hergestellt werden.

## Revendications

1. Raccord femelle à face plate (1) du type comprenant une pluralité de corps coaxiaux sensiblement cylindriques et comprenant des moyens de verrouillage (4, 4a, 2, 2a) adaptés pour empêcher le raccord femelle de se désaccoupler accidentellement d'un raccord mâle (20) et comprenant en outre un corps central (1a) d'une forme cylindrique creuse, sur la surface externe duquel est fournie une gorge (4a) annulaire, au sein de laquelle lesdits moyens de verrouillage (4) sont insérés, lesdits moyens de verrouillage comprenant une pluralité de secteurs (4) arqués, **caractérisé en ce que** lesdits secteurs (4) ont une coupe transversale ayant une première portion inférieure (7) de largeur ou de taille transversale plus petite qui est assemblée au niveau d'une variation de largeur (6a) à décrochement fournie dans une zone sensiblement intermédiaire du profil transversal desdits secteurs (4) arqués, à une seconde portion (6) de largeur ou de taille transversale plus grande, et **en ce que** ladite partie inférieure de ladite gorge (4a) est pourvue d'une réduction de section (4b) que la variation de largeur (6a) à décrochement des secteurs (4) heurte lors du raccordement des raccords mâle et femelle (20, 1).

2. Raccord femelle selon la revendication 1, **caractérisé en ce que** lesdits secteurs (4) arqués sont au nombre de quatre ou six selon la taille du raccord.

3. Raccord femelle selon une ou plusieurs des revendications précédentes, **caractérisé en ce que**, coaxialement et à l'intérieur par rapport audit corps principal (1a) de forme creuse sensiblement cylindrique, il comprend une glissière externe (3) également de forme creuse sensiblement cylindrique.

4. Raccord femelle selon une ou plusieurs des revendications précédentes, **caractérisé en ce que**, coaxialement et à l'extérieur par rapport audit corps principal (1a), il comprend un élément d'écrou à oeil (2) cylindrique creux.

5. Raccord femelle selon l'une quelconque des revendications précédentes, **caractérisé en ce que** lesdits secteurs (4) sont maintenus dans leur position au sein de la gorge (4a) lorsqu'ils heurtent la surface externe de la glissière externe (3) en bas et sont maintenus en position en haut par la présence de l'écrou à oeil (2).

6. Raccord femelle selon l'une quelconque des revendications 1 à 5, **caractérisé en ce que** lesdits secteurs (4) ont une coupe transversale ayant une longueur inférieure (7) de largeur ou de taille transversale plus petite qui est assemblée au moyen d'une variation de largeur (6a) à une longueur de largeur plus grande, ladite longueur de largeur plus grande étant alors réassemblée à une portion supérieure ayant une largeur plus petite au moyen d'une nouvelle variation de section.

7. Raccord femelle selon la revendication précédente, **caractérisé en ce que** lesdits secteurs (4) sont réalisés par moulage à partir de matériau fritté.
